# EUROPÄISCHE PATENTANMELDUNG

(11) **EP 1 349 307 A1**
(43) Veröffentlichungstag der Anmeldung: **01.10.2003**
(21) Anmeldenummer: 02360101.6
(22) Anmeldetag: 25.03.2002
(51) Int. Cl.: H04J 13/00

(54) **OCDM-System, wobei den Knoten unterschiedliche Senderaten zugeordnet sind**

(71) Anmelder: ALCATEL, 75008 Paris (FR)
(72) Erfinder: Pfeiffer, Thomas,Dr., 70569 Stuttgart (DE)
(74) Vertreter: Menzietti, Domenico, Dipl.-Ing

(57) **Zusammenfassung**

Es ist eine Aufgabe der Erfindung, ein OCDM-System bereitzustellen, welches auf einfache Art und Weise Störungen im System minimiert und den Datendurchsatz maximiert. Das erfindungsgemäße OCDM-System zeichnet sich insbesondere dadurch aus, dass die Senderate von in optischen Kanälen auszusendenden optischen Paketen für unterschiedliche optische Knoten des OCDM-Systems unterschiedlich ist. Jedem Knoten eines OCDM-Systems ist beispielsweise ein optischer Kanal zugeordnet. Zudem erfolgt eine Zuordnung der Senderaten von in den optischen Kanälen auszusendenden optischen Paketen, z.B. durch Übermittlung einer individuellen Frequenz zum Knoten.

## Beschreibung

Die Erfindung betrifft ein OCDM-System.

OCDM basiert auf spektraler Kodierung von breitbandigen optischen Quellen; OCDM = Optical Code Division Multiplex, u.a. auch als OCDMA bezeichnet, OCDMA=Optical Code Division Multiple Access. Das Licht einer mit zu übertragenden Daten modulierten LED wird beispielsweise durch ein optisches Filter geleitet und auf diese Weise kodiert; LED=Light Emitting Diode. Mehrere dieser LED und optische Filter Kombinationen werden auf der Sendeseite z.B. über einen optischen Koppler mit einem EDFA verbunden, der mit einer optischen Glasfaserleitung verbunden ist; EDFA=Erbium Doped Fibre Amplifier. Auf diese Art und Weise werden unterschiedlich kodierte optische Signale generiert, die gemeinsam verstärkt über die Glasfaser übertragen werden. Über optische Splitter kann eine Übertragung zu mehreren Empfangsseiten erfolgen. Jede Empfangsseite beinhaltet beispielsweise einen differentiellen Empfänger mit einem entsprechenden optischen Filter zur Dekodierung der für die Empfangsseite bestimmten optischen Signale.

Ein optisches Filter ist beispielsweise als Mach-Zehnder-Filter ausgeführt. Im Mach-Zehnder-Filter wird das empfangene OCDM-Signal über zwei Pfade weitergeleitet, die komplementäre Übertragungsfunktionen aufweisen. Das Mach-Zehnder-Filter kann sowohl zur Kodierung als auch zur Dekodierung von OCDM-Signalen verwendet werden.

Auf der Sendeseite wird z.B. pro optischem Übertragungskanal ein optisches Filter verwendet. Die optischen Filter müssen gegeneinander gut verstimmt sein, um z.B. ein Übersprechen zu reduzieren. Auf der Empfangsseite wird z.B. ein optisches Filter verwendet, das auf den optischen Übertragungskanal abgestimmt wird, der für die Empfangsseite vorgesehen ist. Die optischen Filter auf der Empfangsseite sind auf die optischen Filter auf der Sendeseite abgestimmt.

Die maximale Anzahl der gleichzeitig aktiven optischen Kanäle ist limitiert durch das optische Rauschen, welches aus Fluktuationen und Interferenzen von optischen Feldvektoren verschiedener Quellen herrührt. Idealerweise werden optische Pakete nur dann ausgesandt, wenn sie Nutzinformationen übertragen sollen. In diesem Fall ist die Wahrscheinlichkeit des zeitgleichen Eintreffens zweier unterschiedlicher optischer Pakete an einem Empfänger sehr gering, was zur Folge hat, dass geringe Störungen auftreten.

Eine Möglichkeit Störungen gering zu halten ist die Verwendung des sogenannten MAC-Protokolls, MAC = Medium Access Control. Mittels des MAC-Protokolls wird die Anzahl der gleichzeitig aktiven optischen Kanäle gesteuert. Dadurch wird weitgehend verhindert, dass optische Pakete an den optischen Empfängern zeitgleich eintreffen. Auf diese Art und Weise wird die System-Performance erhöht und der Pegel des optischen Rauschens im System reduziert. Allerdings erfordert das MAC-Protokoll eine recht komplizierte Kommunikation zwischen optischen Sendern und Empfängern. Zudem wird zumeist der mögliche Datendurchsatz vermindert.

Es ist eine Aufgabe der Erfindung, ein OCDM-System bereitzustellen, welches auf einfache Art und Weise Störungen im System minimiert und den Datendurchsatz maximiert.

Gelöst wird diese Aufgabe durch ein OCDM-System gemäß Anspruch 1.

Das erfindungsgemäße OCDM-System zeichnet sich insbesondere dadurch aus, dass die Senderate von in optischen Kanälen auszusendenden optischen Paketen für unterschiedliche optische Knoten des OCDM-Systems unterschiedlich ist.

Die Erfindung ist auf jede Netzwerktopologie anwendbar. Das OCDM-System ist beispielsweise ausgestaltet als Ringnetz, Sternnetz, Baumnetz.

Die Knoten des OCDM-Systems sind beispielsweise ausgestaltet als Add/Drop-Multiplexer oder Cross-Connect. Die Knoten können sowohl als rein optische als auch opto-elektrische ausgeführt sein. Ein Knoten hat beispielsweise einen oder zwei Nachbarknoten mit denen er über optische Leitungen verbunden ist. Zum Empfang von optischen Signalen beinhaltet ein Knoten einen optischen Empfänger, zwecks Aussendung von optischen Signalen einen optischen Sender.

Im folgenden wird ein Ausführungsbeispiel der Erfindung mit verschiedenen Varianten unter Zuhilfenahme einer Figur erläutert.

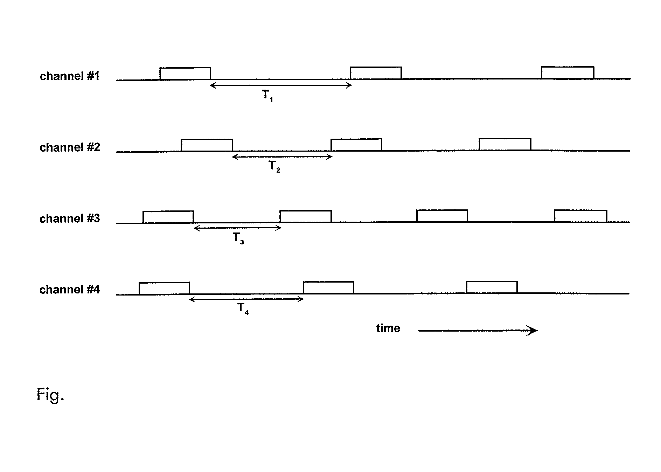

Die Figur zeigt eine bildliche Darstellung der Verteilung von gesendeten optischen Paketen über die Zeit für vier optische Kanäle.

Jedem Knoten eines OCDM-Systems ist beispielsweise ein optischer Kanal zugeordnet. Zudem erfolgt eine Zuordnung der Senderaten von in den optischen Kanälen auszusendenden optischen Paketen. Die Senderate ist die Paketrate, nicht die Bitrate. In den optischen Paketen werden Nutzinformationen, z.B. Internetdaten, Telefonsignale, breitbandige TV-Signale kodiert übertragen. Die Kodierung erfolgt durch optische Filter. Dem ersten Knoten ist beispielsweise der optische Kanal #1 und die Senderate 1/T₁ zugeordnet. Die Zuordnung der Senderate erfolgt z.B. durch Übermittlung einer individuellen Frequenz zum Knoten. Dem zweiten Knoten ist beispielsweise der optische Kanal #2 und die Senderate 1/T₂ zugeordnet. Dem dritten Knoten ist beispielsweise der optische Kanal #3 und die Senderate 1/T₃ zugeordnet. Dem ersten Knoten ist beispielsweise der optische Kanal #4 und die Senderate 1/T₄ zugeordnet. Die Frequenzen für die einzelnen Knoten und somit ihre Senderaten unterscheiden sich voneinander. Auf Grund dessen ist auf der Empfangsseite die Zeitspanne - das sogenannte guard band - zwischen zwei empfangenen optischen Paketen eines Knotens verschieden von der Zeitspanne zwischen zwei empfangenen optischen Paketen eines jeden anderen Knotens. Infolgedessen ist in Mehrkanalsystemen das Auftreten von Interferenzen minimiert und ist im Mittel nahezu konstant.

Die optimierte Wahl der Senderaten ergibt sich aus einem Algorithmus, der die Anzahl der zu verwendenden optischen Kanäle, die Kanalkapazität und die Länge der optischen Pakete berücksichtigt; ggf. werden sich im Betrieb variierende Längen berücksichtigt.

Die erfinderische Idee ist unabhängig von der lokalen Position von Sendern und Empfängern im Netzwerk und den Laufzeitunterschieden. Somit ist sie unabhängig von der Netzwerktopologie.

Die Senderaten werden in vorteilhafter Weise so gewählt, dass sie im oberen kHz-Bereich liegen oder darüber. Damit werden inhärent temporäre Variationen in der Verstärkung von eingesetzten optischen Verstärkern minimiert sowie eine Stabilisierung des Tunings im optischen Empfangsfilter unterstützt.

Die Senderaten können in vorteilhafter Weise zumindest in folgenden drei Arten so gewählt, dass sich im Empfangsbereich die optischen Pakete möglichst nicht überlappen bzw. die Wahrscheinlichkeit eines solchen Überlappens minimiert wird:

Bei einer ersten Variante wird für jeden Knoten eine feste Senderate vorgegeben. Die Senderaten unterscheiden sich im Verhältnis zueinander z.B. wie Primzahlen. Dadurch ist die Möglichkeit des Überlappens minimiert. Eine relative Phasenjustierung und eine feine Regelung sind nicht nötig.

Bei einer zweiten Variante ist in jedem Knoten ein Zufallsgenerator vorgesehen. Die Sendezeitpunkte werden zufällig bestimmt. Der Zufallsgenerator kann z.B. in jedem Knoten aus einem unterschiedlichen Pool von Zahlen Sendezeitpunkte generieren. Dadurch ergibt sich eine unterschiedliche mittlere Senderate für jeden Knoten.

Bei einer dritten Variante überprüft jeder Knoten vor dem Aussenden von optischen Paketen selbständig, ob die optische Leitung frei oder belegt ist, d.h. ob optische Pakete vom Knoten ausgesendet werden können ohne dass diese mit anderen optischen Paketen überlappen. Es wird ein freier Zeitschlitz abgewartet, in dem ein zu übertragendes optisches Paket ausgesandt wird. Dabei wird z.B. für jeden Knoten eine maximale Senderate vorgegeben, um ein Blockieren des Systems durch einen Knoten zu unterbinden.

Ein erfindungsgemäßes System ist beispielhaft wie folgt aufgebaut:
Das OCDM-System beinhaltet mindestens zwei Knoten, die über optische Leitungen miteinander verbunden sind, wobei mindestens zwei Knoten unterschiedliche Senderaten zur Aussendung von optischen Paketen zugeordnet sind. Das System ist topologieunabhängig und kann mit unioder bidirektionalen Verbindungen ausgeführt sein sowie mit oder ohne Reserveleitungen für Ersatzschaltungen. Die Anzahl der Knoten hat z.B. einen Wert zwischen zwei und eintausend.

Das OCDM-System ist in vorteilhafter Weise dadurch gekennzeichnet, dass ein zentraler Knoten oder ein Netzwerkmanagement vorgesehen ist, der bzw. das einen Prozessor mit einem speziellen Computerprogramm aufweist, zwecks Steuerung der Zuordnung von Senderaten zu Knoten. Der Prozessor ist z.B. als Digitaler Signalprozessor oder Mikroprozessor ausgeführt oder ist Teil des Netzwerkmanagement-Rechners bzw. -Servers. Das Computerprogramm ist z.B. in Programmiersprache C++ ausgeführt. Der Algorithmus sieht z.B. vor bei der Initialisierung des Systems individuellen Knoten individuelle Senderaten zuzuweisen. Die Vergabe erfolgt z.B. über eine temporäre Punkt-zu-Punkt Verbindung zu und Kommunikation mit jedem einzelnen Knoten. Die Übersicht über alle zugeordneten Senderaten wird z.B. zentral im Netzwerkmanagement gespeichert und ggf. zusätzlich allen Knoten zur lokalen Speicherung übermittelt. Alternativ zur zentralen Steuerung und Vergabe kann auch gleich bei der Installation der Knoten jedem Knoten eine individuelle Senderate zugeordnet werden, z.B. durch lokale Programmierung. Vorteil ist, dass das System mittels plug and play funktioniert und ohne zentrale Steuerung. In dieser Variante wären dann aber die Senderaten fest vergeben. Alternativ könnte eine dynamische Vergabe der Senderaten erfolgen, die von Verbindung zu Verbindung geändert werden kann und für die Dauer einer aktiven Übertragung von Informationen erfolgt.

Es ist nicht zwingend, dass allen Knoten oder allen optischen Kanälen eine andere Senderate zugewiesen wird. Die Anzahl der Senderaten kann z.B. auch niedriger sein als die Anzahl von optischen Kanälen. Zwei Knoten können z.B. zwei unterschiedliche optische Kanäle aber identische Senderaten zugeordnet sein. Es ist für jedes individuelle System eine optimierte Verteilung von Senderaten angepasst an Topologie, Anzahl optischer Kanäle, etc. vorteilhaft.

Eine Erweiterung des System ist auf einfache Art und Weise durch Hinzuschaltung eines zusätzlichen Knoten möglich. Dem Knoten wird z.B. ein zusätzlicher optische Kanal und eine zusätzliche Senderate zugewiesen.

Im OCDM-System ist z.B. mindestens ein Knoten vorgesehen, der eine Steuerung aufweist, zwecks Detektion mindestens einer empfangenen Senderate und Kontrolle und Bereitstellung einer dem Knoten zugeordneten Senderate. Die Steuerung ist z.B. als programmierter Prozessor ausgeführt. Beim Synchronisationsvorgang oder im Verbindungsaufbau wird z.B. im ersten optischen Paket zusätzlich zur Adresse des Knotens eine Information über die Senderate mit übertragen. Der Empfangsknoten detektiert sowohl seine Adresse als auch die Senderate und stellt seinen Empfänger auf einen Datenempfang mit einer Empfangsrate ein, die der detektierten Senderate entspricht.

Im folgenden wird ein zugehöriges Verfahren zum Übertragen von OCDM-Signalen beschrieben:

Knoten eines OCDM-Systems werden unterschiedliche Senderaten zur Aussendung von optischen Paketen zugeordnet. Dies kann zentral oder dezentral bei der Initialisierung oder dynamisch bei Verbindungsaufbau geschehen. Jeder Knoten sendet optische Pakete mit zu übertragenden Daten mit der ihm zugeordneten Senderate aus. Die Aussendung erfolgt in einem optischen Kanal, der dem Knoten zugeordnet ist. Beispielsweise sind fünf Knoten in einer Ringstruktur über optische Leitungen derart zusammengeschaltet, dass jeder Knoten optische Signale zu jedem anderen Knoten senden kann. Es sind beispielsweise fünf optische Kanäle zur Übertragung von Informationen vorgesehen. Jeder Knoten ist derart ausgestaltet, dass er einen dieser optischen Kanäle als Sendekanal und vier weitere als Empfangskanäle verwendet. Jeder Knoten hat einen anderen Sendekanal. Zusätzlich zu den unterschiedlichen Kanälen sind fünf unterschiedliche Senderaten vergeben. Dem ersten optischen Kanal ist z.B. die erste Senderate zugewiesen, dem zweiten optischen Kanal die zweite Senderate, usw. Bei dieser fixen Vergabe sendet der erste Knoten optische Signale im ersten optischen Kanal, wobei die darin enthaltenen optische Pakete mit der ersten Senderate ausgesandt werden. Im zweiten bis vierten Knoten ist die Information, dass dem ersten Kanal die erste Senderate zugeordnet ist gespeichert. Die Information wird z.B. durch ein Netzwerkmanagementsystem bereitgestellt oder durch einen zentralen Knoten. Somit erfolgt z.B. im fünften Knoten der Empfang von optischen Signalen im ersten optischen Kanal mit einer ersten Empfangsrate, die der ersten Senderate entspricht, im zweiten optischen Kanal mit einer zweiten Empfangsrate, die der zweiten Senderate entspricht, usw.

Bei einer vorteilhaften Ausgestaltung der Erfindung wird für jeden Knoten im OCDM-System eine minimale Senderate vorgesehen. Jeder Knoten sendet dann mit seiner individuellen Senderate optische Pakete, die wenn keine Nutzinformationen vorhanden sind Testsignale oder ähnliches enthalten. Für den Fall der Aussendung von Nutzinformationen kann die Senderate erhöht, im Fall von Testsignalen erniedrigt werden, so dass eine adaptive Einstellung, z.B. gesteuert durchs Netzwerkmanagement erfolgt, die mögliche auftretende Interferenzen minimiert. Vorteilhaft wirkt sich ferner aus, dass durch ein stetes Senden Drifts von Bauteilen vermieden werden. Drifts sind z.B. Wellenlängendrifts wenn es sich um Netze mit Laserquellen handelt. Ferner erhalten vorhandene Regelschleifen stets ein zumindest quasi-kontinuierliches Signal, das eine Regelung ermöglicht. Des weiteren kann eine minimale Übertragungskapazität pro Kanal garantiert werden wenn die Senderaten entsprechend niedrig gewählt werden.

Eine weitere Anwendungsmöglichkeit besteht darin, über die Senderate einen Quality of Service (QoS) zu variieren bzw. einzustellen. Ein höherer bzw. sicherer Durchsatz kann erzielt werden durch eine Erhöhung einer individuellen Senderate in einem optischen Kanal, ggf. bei gleichzeitiger Reduzierung der Senderaten in anderen Kanälen. Der zentrale Knoten oder das Netzwerkmanagement kann durch einen geeigneten Algorithmus die Steuerung dieser QoS Variationen übernehmen. Der zentrale Knoten oder das Netzwerkmanagement ist geeignet, die Senderaten für einzelne Knoten während des Betriebs dynamisch zu variieren, um verschiedene QoS-Klassen einzustellen. Einem Knoten können auch zwei oder mehr Senderaten zur Übertragung unterschiedlicher QoS-Klassen zugewiesen werden.

Anstelle bei einem OCDM-System ist die Erfindung auch bei einem WDModer DWDM-System anwendbar, WDM = Wavelength Division Multiplex, DWDM = Dense WDM. Die Senderaten für optische Pakete, die von Knoten auf unterschiedlichen Wellenlängen ausgesandt werden, werden wie oben beschrieben den Knoten zugeordnet, z.B. mittels zentraler Vergabe im Verhältnis von Primzahlen oder einem anderen Verhältnis, wobei die Senderaten nicht zu unterschiedlich sein sollten, mittels Zufallsgeneratoren, die Sendezeitpunkte für einzelne Knoten generieren oder mittels geeigneten Detektoren, die den Zustand der optischen Leitung überprüfen und einen freien Zeitschlitz zur Aussendung von optischen Paketen verwenden.

## Patentansprüche

1. OCDM-System beinhaltend mindestens zwei Knoten, die über optische Leitungen miteinander verbunden sind, wobei mindestens zwei Knoten unterschiedliche Senderaten zur Aussendung von optischen Paketen zugeordnet sind.

2. OCDM-System nach Anspruch 1, **dadurch gekennzeichnet, dass** ein zentraler Knoten oder ein Netzwerkmanagement vorgesehen ist, der bzw. das einen Prozessor mit einem speziellen Computerprogramm aufweist, zwecks Steuerung der Zuordnung von Senderaten zu Knoten.

3. OCDM-System nach Anspruch 1, **dadurch gekennzeichnet, dass** ein zentraler Knoten oder ein Netzwerkmanagement vorgesehen ist, der bzw. das geeignet ist, die Senderaten für einzelne Knoten während des Betriebs dynamisch zu variieren, um verschiedene QoS-Klassen einzustellen.

4. OCDM-System nach Anspruch 1, **dadurch gekennzeichnet, dass** mindestens ein Knoten vorgesehen ist, der eine Steuerung aufweist, zwecks Detektion mindestens einer empfangenen Senderate und Kontrolle und Bereitstellung einer dem Knoten zugeordneten Senderate.

5. Verfahren zum Übertragen von OCDM-Signalen, bei dem mindestens zwei Knoten eines OCDM-Systems unterschiedliche Senderaten zur Aussendung von optischen Paketen zugeordnet werden und jeder Knoten optische Pakete mit zu übertragenden Daten mit der ihm zugeordneten Senderate aussendet.

6. Knoten für ein OCDM-System beinhaltend mindestens zwei Knoten, die über optische Leitungen miteinander verbunden sind, wobei mindestens zwei Knoten unterschiedliche Senderaten zur Aussendung von optischen Paketen zugeordnet sind und wobei der Knoten eine Steuerung aufweist, die derart ausgestaltet ist optische Pakte mit mindestens einer Senderate zu empfangen und mindestens eine dem Knoten zugeordnete oder im Knoten generierte Senderate bereitzustellen.

7. Knoten nach Anspruch 6, **dadurch gekennzeichnet, dass** ein Zufallsgenerator vorgesehen ist mittels dessen Sendezeitpunkte für auszusendende optische Pakete generiert werden.

8. Knoten nach Anspruch 6, **dadurch gekennzeichnet, dass** der Knoten derart ausgestaltet ist, vor dem Aussenden von optischen Paketen selbständig zu überprüfen, ob die optische Leitung frei oder belegt ist und ein optisches Paket in einem freien Zeitschlitz aussendet.
